# EUROPÄISCHE PATENTSCHRIFT

(11) **EP 3 464 894 B1**
(45) Veröffentlichungstag und Bekanntmachung des Hinweises auf die Patenterteilung: **12.02.2020**
(21) Anmeldenummer: 17748728.7
(22) Anmeldetag: 02.08.2017
(51) Int. Cl.: F03D 15/00, F03D 80/70, F16H 1/46

(54) **WINDKRAFTGETRIEBE**
WIND TURBINE TRANSMISSION
TRANSMISSION D'ÉOLIENNE

(30) Priorität: 04.08.2016 DE 102016214452
(43) Veröffentlichungstag der Anmeldung: 10.04.2019
(73) Patentinhaber: Flender GmbH, 46395 Bocholt (DE)
(72) Erfinder: KLEIN-HITPASS, Arno, 52074 Aachen (DE)
(74) Vertreter: Maier, Daniel Oliver
(86) Internationale Anmeldenummer: PCT/EP2017/069498
(87) Internationale Veröffentlichungsnummer: WO 2018/024761

(56) Entgegenhaltungen:
- WO-A1-2012/055832
- CN-A- 102 312 928
- CN-A- 104 061 316
- CN-U- 203 230 542
- DE-U1-202011 107 611

## Beschreibung

Es sind mehrstufige Windkraftgetriebe bekannt, bei denen die schnelllaufende Stufe, auch als HSS (= High Speed Stage) bezeichnet, eine Stirnradstufe aufweist, welche ein Stirnrad und ein mit dem Stirnrad kämmendes Ritzel, das auf einer Ritzelwelle angeordnet ist, umfasst. Dabei ist das Stirnrad über eine Hohlwelle in dem Getriebegehäuse drehbar gelagert. WO2015/032591A1 (Siemens AG) 12. März 2015 offenbart ein derartiges mehrstufiges Windkraftgetriebe.

Hohe Kosten entstehen dabei in der Regel durch das sehr massive Stirnrad, die Hohlwelle sowie die Verbindung zwischen dem Stirnrad und der Hohlwelle, welche meistens durch eine Passfeder- und/oder Schrumpfverbindung realisiert wird. Des Weiteren ist die Servicefähigkeit eingeschränkt - in der Regel kann nur die HSS mit begrenztem Aufwand aus der Turbine gezogen werden.

Aus der Druckschrift CN 203 230 542 U ist ein Planetengetriebe für eine Windkraftanlage bekannt, das zwei Planetenstufen und eine Stirnradstufe umfasst. Auf einer Sonnenwelle ist ein Stirnrad angeordnet, dessen Nabe axial verlängert ausgebildet ist. An einem Ende stützt sich die Nabe des Stirnrads auf der Sonnenwelle und einen Lager ab und am entgegengesetzten Ende stützt sich die Nabe an einem Lager ab, das in einem Gehäuse aufgenommen ist. Das Stirnrad weist einen Radkörper auf, der axial kürzer ausgebildet ist als die Nabe und. Der Radkörper ist auf der axial verlängerten Nabe, in einer Axialrichtung betrachtet, mittig positioniert. Eine am radialen Ende des Radkörpers ausgebildete Verzahnung kämmt mit einer Verzahnung an einer Ausgangswelle.

Das Dokument CN 201 358 892 Y offenbart ein Planetengetriebe mit zwei Planetenstufen, an die sich eine Stirnradstufe anschließt. Auf einer Sonnenwelle ist ein Stirnrad aufgenommen, das eine axial verlängerte Nabe aufweist. Die axial verlängerte Nabe ist an einer Außenseite an beiden Enden jeweils in einem Innenring eines Lagers drehbar aufgenommen. Die Lager wiederum sind an einem Gehäuse befestigt. Das Stirnrad weist auch einen Radkörper auf, der axial kürzer ausgebildet ist als die Nabe und als eine radial außen am Radkörper angebrachte Verzahnung. Der Radkörper ist, entlang einer Axialrichtung betrachtet, mittig auf der Nabe positioniert.

Ferner zeigt die Druckschrift KR 2011 128054 A ein Windkraftanlagengetriebe, das zwei Planetenstufen aufweist. Eine Sonnenwelle des Getriebes ist drehmomentübertrag in einer ersten Hohlwelle aufgenommen, die wiederum drehbar in einem Lager gelagert ist. Die erste Hohlwelle wirkt als axiale Verlängerung der Sonnenwelle und ist generatorseitig mit einem an einem Flansch axial aufgeschraubten Stirnrad verbunden. Das Stirnrad weist generatorseitig eine Nabe auf, die in einem Lager drehbar aufgenommen ist. Das Stirnrad weist einen an die Nabe angeformten Radkörper auf, der radial außen mit einer Verzahnung versehen ist, die mit einer Ausgangswelle kämmt.

Es ist Aufgabe der vorliegenden Erfindung, ein Windkraftgetriebe bereitzustellen, das hinsichtlich Kosten und Servicefreundlichkeit Vorteile aufweist.

Diese Aufgabe wird erfindungsgemäß durch ein Windkraftgetriebe mit den in Anspruch 1 bzw. den in Anspruch 2 angegebenen Merkmalen gelöst.

Das erfindungsgemäße Windkraftgetriebe umfasst eine schnelllaufende Stirnradstufe, welche ein HSS-Stirnrad und ein damit kämmendes HSS-Ritzel aufweist, wobei das HSS-Ritzel auf einer HSS-Ritzelwelle angeordnet ist. Eine Außenverzahnung des HSS-Stirnrads kann mit einer Außenverzahnung des HSS-Ritzels kämmen.

Das HSS-Stirnrad ist direkt in einem Getriebegehäuse des Windkraftgetriebes gelagert, d.h. das HSS-Stirnrad sitzt nicht, wie bei herkömmlichen Windkraftgetrieben, auf einer drehbar gelagerten Hohlwelle. Ein Gleit- oder Wälzlager zur Lagerung des HSS-Stirnrads kontaktiert das HSS-Stirnrad vorzugsweise unmittelbar.

Eine Sonnenradwelle einer der schnelllaufenden Stirnradstufe vorgeschalteten Getriebestufe, vorzugsweise eine Planetengetriebestufe, ist direkt mit dem HSS-Stirnrad gekoppelt. Die Sonnenradwelle kann mit einer Kupplung, vorzugsweise einer Zahnkupplung, mit dem HSS-Stirnrad gekoppelt sein.

Die Bezeichnung schnelllaufend ist ein relativer Begriff, der im Kontext der unterschiedlichen Getriebestufen eines mehrstufigen Getriebes verständlich ist. Bei einem mehrstufigen Windkraftgetriebe, d.h. einem Windkraftgetriebe mit zwei oder mehr Getriebestufen, gibt es Getriebestufen, in denen sich die die Getriebestufe bildenden rotierenden Elemente langsamer bewegen als in anderen Getriebestufen: somit kann man in einem zweistufigen Getriebe eine langsamlaufende Stufe (LSS = Low Speed Stage) und eine schnelllaufende Stufe (HSS) unterscheiden, in einem dreistufigen Getriebe eine langsamlaufende Stufe (LSS), eine mittelschnelllaufende Stufe (IMS = Intermediate Stage) und eine schnelllaufende Stufe (HSS) unterscheiden.

Die den jeweiligen Getriebestufen LSS, IMS und HSS zugeordneten Maschinenbauteile werden durch die jeweiligen vorangestellten Bezeichnungen LSS-, IMS- und HSS- gekennzeichnet. Zum Beispiel kann anstatt der Bezeichnung "IMS-Sonnenradwelle" gleichbedeutend die Bezeichnung "Sonnenradwelle der IMS" verwendet werden. Die Bezeichnungen "antriebsseitig" und "rotorseitig" werden synonym verwendet, ebenso die Bezeichnungen "abtriebsseitig" und "generatorseitig".

Ein Lager wie ein Gleit- oder Wälzlager kann auch als eine Lageranordnung bezeichnet werden. Im Falle eines Gleitlagers umfasst das Lager bzw. die Lageranordnung zwei sich relativ zueinander bewegende Teile, zwischen denen ein Gleitspalt gebildet wird. Im Falle eines Wälzlagers umfasst das Lager bzw. die Lageranordnung zwei sich relativ zueinander bewegende Lagerringe mit dazwischen angeordneten Wälzkörpern.

Die erfinderische Lösung besteht darin, dass das HSS-Stirnrad direkt über ein Gleit- oder Wälzlager im Getriebegehäuse gelagert ist und die Sonnenradwelle der vorgeschalteten Planetengetriebestufe direkt, vorzugsweise über eine Kupplung, insbesondere eine Zahnkupplung, mit dem HSS-Stirnrad gekoppelt ist. Die bei herkömmlichen Windkraftgetrieben vorhandene HSS-Hohlwelle als Träger des HSS-Stirnrads und die drehfeste Verbindung zwischen der Hohlwelle und dem HSS-Stirnrad kann somit entfallen. Dadurch können Kosten eingespart und die Servicefähigkeit des Windkraftgetriebes verbessert werden.

Gemäß der Erfindung ist ferner das Lager des HSS-Stirnrads in das HSS-Stirnrad integriert. Hierbei ist das HSS-Stirnrad so gestaltet, dass im Radkörper Bauraum für die Lageranordnung zur Verfügung steht. Der Steg ist zwischen der Nabe und dem Zahnkranz HSS-Stirnrads außermittig angeordnet, so dass zwischen der Nabe und dem Zahnkranz ein Raum für die Lageranordnung geschaffen ist. Von Vorteil ist dabei, dass das Lager platzsparend angeordnet werden kann. Der wertvolle Bauraum im Getriebegehäuse wird somit optimal ausgenutzt.

Vorteilhafte Ausgestaltungen und Weiterbildungen der Erfindung sind in den abhängigen Ansprüchen angegeben.

Gemäß einer bevorzugten Ausgestaltung der Erfindung bildet die HSS-Ritzelwelle die Ausgangswelle des Windkraftgetriebes. Von Vorteil ist dabei, dass eine weitere, reibungsbehaftete und somit den Wirkungsgrad verschlechternde Getriebestufe, in der eine Rotation des HSS-Ritzels auf eine Rotation einer eigens vorgesehenen Ausgangswelle übertragen wird, vermieden wird.

Bei herkömmlichen Windkraftgetrieben ist das Stirnrad über eine Hohlwelle mittels Gleit- und/oder Wälzlager gelagert, wobei die Hohlwelle beidseitig, vorzugsweise an den beiden Stirnseiten des Stirnrads, d.h. rotor- und generatorseitig, gelagert ist. Somit sind auf beiden Seiten des Stirnrads Lageranordnungen bereitzustellen und zu warten; auch ist hierzu das Getriebegehäuse konstruktiv so auszugestalten, dass an geeigneten Positionen innerhalb des Getriebegehäuses Lagerstellen für die Lageranordnungen vorhanden sind. Gemäß einer bevorzugten Ausgestaltung der Erfindung ist das HSS-Stirnrad einseitig gelagert. Da das HSS-Stirnrad nur noch einseitig gelagert ist, kann das Getriebegehäuse wesentlicher einfacher gestaltet werden als bei herkömmlichen Windkraftgetrieben.

Gemäß einer bevorzugten Ausgestaltung der Erfindung ist das HSS-Stirnrad an einem mit dem Getriebegehäuse fest verbundenen Trägerelement gelagert, z.B. mittels eines am Getriebegehäuse fixierten Trägerelements gelagert. Von Vorteil ist bei einer Lagerung mittels eines separaten Trägerelements, dass die Lagerunganordnung hinsichtlich Belastbarkeit und Servicefähigkeit optimal ausgestaltet werden kann. Von Vorteil ist bei der Lagerung direkt im Getriebegehäuse, dass im Getriebegehäuse ohnehin vorhandene konstruktive Elemente für die Lagerunganordnung genutzt werden und somit die Anzahl von Bauteilen und der Konstruktionsaufwand gering gehalten wird.

Gemäß einer bevorzugten Ausgestaltung der Erfindung ist das HSS-Stirnrad rotor- oder generatorseitig im Getriebegehäuse gelagert. Somit können an für ein jeweiliges Getriebegehäuse am besten geeigneten Positionen innerhalb des Getriebegehäuses Lagerstellen für die Lageranordnungen geschaffen werden.

Gemäß einer bevorzugten Ausgestaltung der Erfindung ist das HSS-Stirnrad geschmiedet, aus mehreren Elementen geschweißt oder verschraubt oder mittels eines spanenden Verfahrens aus einem massiven Körper hergestellt. Eine Kombination aus einem der genannten Herstellungsverfahren ist auch denkbar. Ebenfalls kann der Radkörper des Stirnrads aus einem massiven Körper über ein spanendes Verfahren hergestellt werden. Von Vorteil ist dabei, dass eine für die jeweilige konstruktive Situation optimale Lösung gewählt werden kann.

Die oben beschriebenen Eigenschaften, Merkmale und Vorteile dieser Erfindung sowie die Art und Weise, wie diese erreicht werden, werden klarer und deutlicher verständlich durch die folgende Beschreibung, welche anhand der Zeichnungen näher erläutert wird. Es zeigt jeweils schematisch und nicht maßstabsgetreu:
- Fig. 1: ein Windkraftgetriebe mit einer herkömmlich gestalteter HSS;
- Fig. 2: ein Windkraftgetriebe mit einer erfindungsgemäßen HSS;
- Fig. 3: eine separate Darstellung der in Fig. 2 gezeigten HSS;
- Fig. 4: eine alternative Ausgestaltung einer HSS;
- Fig. 5: eine Ausgestaltung einer HSS mit Gleitlagern;
- Fig. 6: eine alternative Ausgestaltung einer HSS mit Gleitlagern;
- Fig. 7: eine weitere Ausgestaltung einer HSS mit Gleitlagern; und
- Fig. 8: eine Explosionsdarstellung von Fig. 7.

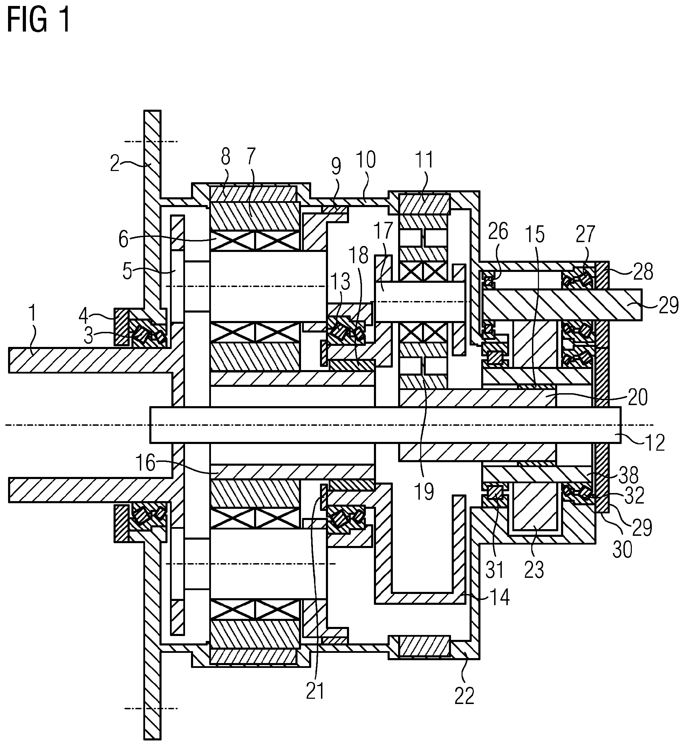

Fig. 1 stellt ein Windkraftgetriebe mit einer herkömmlich gestalteten HSS dar. Das Windkraftgetriebe umfasst eine antriebsseitige erste Planetenstufe 1, 5, 7, 8, 16 als LSS, eine der ersten Planetenstufe nachgeschaltete abtriebsseitige zweite Planetenstufe 11, 14, 17, 19 20 als IMS sowie eine abtriebsseitige Stirnradstufe 23, 29 als HSS, wobei die Getriebestufen von einem Getriebegehäuse 22 umgeben sind. Das Getriebegehäuse 22 ist dabei durch eine mit dem Getriebegehäuse 22 verbundene Getriebestütze 2, die auch als Drehmomentstütze dient, in einer WKA-Gondel lagerbar (WKA = Windkraftanlage). Die antriebsseitige erste Planetenstufe wird im Folgenden als LSS-Planetenstufe, die abtriebsseitige zweite Planetenstufe als IMS-Planetenstufe und die abtriebsseitige Stirnradstufe als HSS- Stirnradstufe bezeichnet.

Im Getriebegehäuse 22 sind ein mit einer Rotornabe verbindbarer LSS-Planetenträger 1 und eine mit einem Generator verbindbare HSS-Ritzelwelle 29 gelagert. Die beiden Planetenstufen umfassen jeweils ein Hohlrad 8, 11, mehrere in einem Planetenträger 1, 14 gelagerte Planetenräder 7, 19 und eine Sonnenradwelle 16, 20. Dabei sind die LSS-Planetenräder 7 über LSS-Planetenradlager 6 drehbar auf im LSS-Planetenträger 1 gehaltenen LSS-Planetenradachsen 5 gelagert. Außerdem sind die IMS-Planetenräder 19 über LSS-Planetenradlager drehbar auf im IMS-Planetenträger 14 gehaltenen IMS-Planetenradachse 17 gelagert. Die beiden als Hohlwellen ausgebildeten Sonnenradwellen 16, 20, d.h. die LSS-Sonnenradwelle 16 und die IMS-Sonnenradwelle 20, umgeben ein das Getriebegehäuse 22 axial durchlaufendes Pitchrohr 12, welches einen Kanal vom generatorseitigen Ende zum rotorseitigen Ende des Windkraftgetriebes ausbildet.

Der LSS-Planetenträger 1 der antriebsseitigen LSS-Planetenstufe weist dabei eine zum Windrotor gerichtete Hohlwelle zum Anschluss an einer Rotornabe des Windrotors auf. Der LSS-Planetenträger 1 ist über ein antriebsseitiges Lager 3, ein LSS-Führungslager 9 und ein abtriebsseitiges Lager 13 drehbar im Getriebegehäuse 22 gelagert. Dabei ist das antriebsseitige Lager 3 durch einen rotorseitigen Getriebedeckel 4 gegen Umwelteinflüsse geschützt. Außerdem ist das LSS-Führungslager 9 an einem Gehäuseflansch 10, der das LSS-Hohlrad 8 und das IMS-Hohlrad 11 verbindet, angeordnet.

Die mit einem Sonnenrad der antriebsseitigen LSS-Planetenstufe drehfest verbundene LSS-Sonnenradwelle 16 ist über eine erste Kupplung 18 mit dem IMS-Planetenträger 14 der IMS-Planetenstufe verbunden. Dabei weist der IMS-Planetenträger 14 der IMS-Planetenstufe antriebsseitig eine Hohlwelle auf, die einen Endabschnitt der LSS-Sonnenradwelle 16 der antriebsseitigen LSS-Planetenstufe konzentrisch umgibt. Die erste Kupplung 18, die als eine Kurzverzahnungskupplung ausgebildet sein kann, zwischen den beiden Planetenstufen kann dabei durch eine Außenverzahnung an der LSS-Sonnenradwelle 16 der antriebsseitigen LSS-Planetenstufe und durch eine Innenverzahnung an der Hohlwelle des IMS-Planetenträgers 14 der IMS-Planetenstufe gebildet sein.

Der IMS-Planetenträger 14 ist, wie der LSS- Planetenträger 1, über das abtriebsseitige Lager 13 drehbar im Getriebegehäuse 22 gelagert. Dabei ist an dem antriebsseitigen Ende der Hohlwelle des IMS-Planetenträgers 14 ein Befestigungsdeckel 21 angeordnet, der auch einen Anschlag für einen Innenring des abtriebsseitigen Lagers 13 bildet.

Die HSS-Stirnradstufe umfasst neben der HSS-Ritzelwelle 29 ein mit diesem kämmendes HSS-Stirnrad 23 und eine HSS-Hohlwelle 38, die vom HSS-Stirnrad 23 koaxial umgeben und mit diesem drehfest verbunden ist. Dabei ist die HSS-Hohlwelle 38 in einem rotorseitigen Lager 31 und einem generatorseitigen Lager 32 im Getriebegehäuse 22 drehbar gelagert. Dabei ist das generatorseitige Lager 32 durch eine generatorseitige Abdeckung 30 der HSS-Hohlwelle 38 gegen Umwelteinflüsse geschützt.

Analog dazu ist die HSS-Ritzelwelle 29 in einem rotorseitigen Lager 26 und einem generatorseitigen Lager 27 im Getriebegehäuse 22 drehbar gelagert. Dabei ist das generatorseitige Lager 27 durch eine generatorseitige Abdeckung 28 der HSS-Ritzelwelle 29 gegen Umwelteinflüsse geschützt.

Die mit einem Sonnenrad der IMS-Planetenstufe drehfest verbundene IMS-Sonnenradwelle 20 ist über eine zweite Kupplung 15 mit der Hohlwelle 38 der HSS-Stirnradstufe verbunden, die einen Endabschnitt der IMS-Sonnenradwelle 20 koaxial umgibt. Die zweite Kupplung 15, die als eine Kurzverzahnungskupplung ausgebildet sein kann, zwischen der IMS-Planetenstufe und der HSS-Stirnradstufe ist dabei durch eine Außenverzahnung an der IMS-Sonnenradwelle 20 der IMS-Planetenstufe und durch eine Innenverzahnung an der Hohlwelle 38 der HSS-Stirnradstufe gebildet.

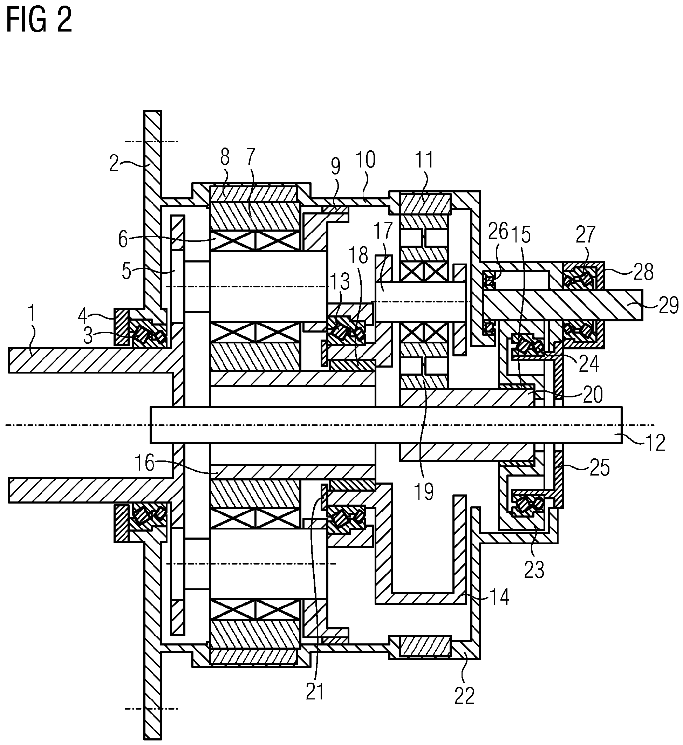

Fig. 2 stellt ein Windkraftgetriebe mit einer erfindungsgemäß gestalteten HSS dar. Es handelt sich um wie bei dem in Fig. 1 dargestellten Windkraftgetriebe um ein dreistufiges Getriebe, wobei die LSS-Planetengetriebestufe und die IMS-Planetengetriebestufe wie bei dem in Fig. 1 dargestellten Windkraftgetriebe ausgebildet sind. Ein wesentlicher Unterschied zu dem in Fig. 1 dargestellten Windkraftgetriebe besteht in der HSS: während bei der herkömmlich gestalteten HSS das HSS-Stirnrad 23 drehfest auf einer rotierbar gelagerten HSS-Hohlwelle angeordnet ist, ist bei der herkömmlich gestalteten HSS das HSS-Stirnrad 23 selbst in dem Getriebegehäuse 22 drehbar gelagert, d.h. es wird auf eine HSS-Hohlwelle verzichtet.

Das HSS-Stirnrad 23 ist mittels eines Lagers 24 an einem Trägerelement 25 gelagert, das fest mit dem Getriebegehäuse 22 verbunden ist.

Dabei ist die mit einem Sonnenrad der IMS-Planetenstufe drehfest verbundene IMS-Sonnenradwelle 20 über eine zweite Kupplung 15 direkt mit dem HSS-Stirnrad 23 verbunden. Die zweite Kupplung 15, die als eine Kurzverzahnungskupplung ausgebildet sein kann, zwischen der IMS-Planetenstufe und dem HSS-Stirnrad 23 ist dabei durch eine Außenverzahnung an der IMS-Sonnenradwelle 20 der IMS-Planetenstufe und durch eine Innenverzahnung an dem HSS-Stirnrad 23 der HSS-Stirnradstufe gebildet.

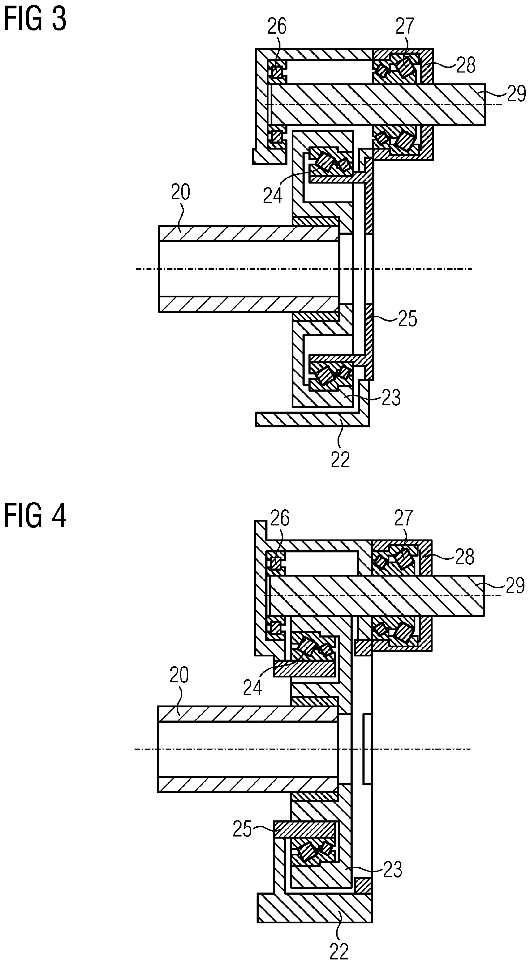

Fig. 3 ist eine separate Darstellung der in Fig. 2 gezeigten HSS. Hierdurch wird unter anderem gezeigt, dass die gesamte HSS, umfassend das HSS-Stirnrad 23 und die HSS-Ritzelwelle 29, als ein eigenständiges Modul gebaut und an das Getriebegehäuse montiert werden kann. Dabei ist das HSS-Stirnrad 23 generatorseitig im Getriebegehäuse 22 gelagert. Das das Lager 24 tragende Trägerelement 25 ragt generatorseitig in eine generatorseitige Ausnehmung des HSS-Stirnrads 23. Das Lager 24 ist zwischen dem Trägerelement 25 und einem radial weiter außen verlaufenden Innenumfang eines Zahnkranzes des HSS-Stirnrads 23 angeordnet. Der Steg zwischen der Nabe und dem Zahnkranz des HSS-Stirnrads 23 ist außermittig angeordnet, so dass zwischen der Nabe und dem Zahnkranz ein Raum für die Lageranordnung 24 des HSS-Stirnrads 23 geschaffen ist.

Fig. 4 zeigt eine alternative Ausgestaltung einer erfindungsgemäßen HSS. Dabei ist das HSS-Stirnrad 23 rotorseitig im Getriebegehäuse 22 gelagert. Das das Lager 24 tragende Trägerelement 25 ragt rotorseitig in eine rotorseitige Ausnehmung des HSS-Stirnrads 23. Das Lager 24 ist zwischen dem Trägerelement 25 und einem radial weiter außen verlaufenden Innenumfang eines Zahnkranzes des HSS-Stirnrads 23 angeordnet.

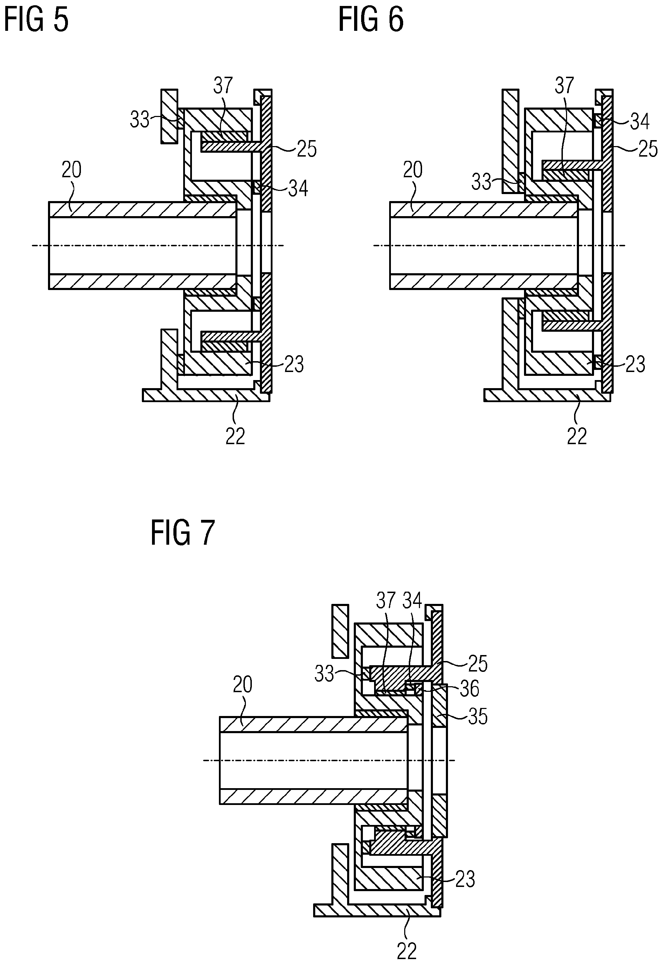

Fig. 5 zeigt eine Ausgestaltung einer HSS mit Gleitlagern. Dabei ist das HSS-Stirnrad 23 generatorseitig im Getriebegehäuse 22 gelagert. Das das radiale Gleitlager 37 tragende Trägerelement 25 ragt generatorseitig in eine generatorseitige Ausnehmung des HSS-Stirnrads 23. Das radiale Gleitlager 37 ist zwischen dem Trägerelement 25 und einem radial weiter außen umlaufenden Innenumfang eines Zahnkranzes des HSS-Stirnrads 23 angeordnet. Zusätzlich ist eine rotorseitige Stirnfläche des HSS-Stirnrads 23 mittels eines rotorseitigen axialen Gleitlagers 33 an einem rotorseitigen Abstützelement, welches mit dem Getriebegehäuse fest verbunden ist, abgestützt. Zusätzlich ist eine generatorseitige Stirnfläche des HSS-Stirnrads 23 mittels eines generatorseitigen axialen Gleitlagers 34 an einem generatorseitigen Trägerelement 25 abgestützt, das fest mit dem Getriebegehäuse 22 verbunden ist.

Fig. 6 zeigt eine alternative Ausgestaltung einer HSS mit Gleitlagern. Dabei ist das HSS-Stirnrad 23 generatorseitig im Getriebegehäuse 22 gelagert. Das das radiale Gleitlager 37 tragende Trägerelement 25 ragt generatorseitig in eine generatorseitige Ausnehmung des HSS-Stirnrads 23. Das radiale Gleitlager 37 ist zwischen dem Trägerelement 25 und einem radial weiter innen umlaufenden Außenumfang des HSS-Stirnrads 23 angeordnet. Zusätzlich ist eine rotorseitige Stirnfläche des HSS-Stirnrads 23 mittels eines rotorseitigen axialen Gleitlagers 33 an einem rotorseitigen Abstützelement, welches mit dem Getriebegehäuse fest verbunden ist, abgestützt. Zusätzlich ist eine generatorseitige Stirnfläche des HSS-Stirnrads 23 mittels eines generatorseitigen axialen Gleitlagers 34 an einem generatorseitigen Trägerelement 25 abgestützt, das fest mit dem Getriebegehäuse 22 verbunden ist.

Fig. 7 zeigt eine weitere Ausgestaltung einer HSS mit einem Gleitlager. Dabei ist das HSS-Stirnrad 23 generatorseitig im Getriebegehäuse 22 gelagert. Das das radiale Gleitlager 37 tragende Trägerelement 25 ragt generatorseitig in eine generatorseitige Ausnehmung des HSS-Stirnrads 23. Das radiale Gleitlager 37 ist zwischen dem Trägerelement 25 und einem radial weiter innen umlaufenden Außenumfang des HSS-Stirnrads 23 angeordnet. Zusätzlich ist eine zum Rotor gerichtete Stirnfläche einer axialen Befestigungsscheibe 36, welche axial unbeweglich an dem HSS-Stirnrad 23 befestigt ist, mittels eines generatorseitigen axialen Gleitlagers 34 an dem Trägerelement 25 abgestützt. Zusätzlich ist eine zum Generator gerichtete Stirnfläche des HSS-Stirnrads 23 mittels eines rotorseitigen axialen Gleitlagers 33 an dem Trägerelement 25 abgestützt. Das Trägerelement 25 ist dabei von einem Deckel 35 des Getriebegehäuses 22 axial fixiert.

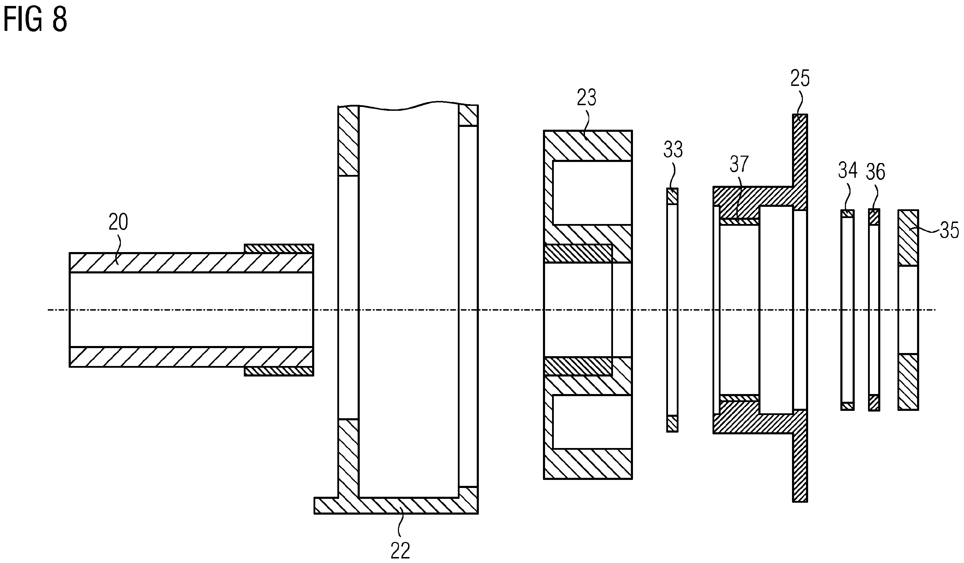

Fig. 8 zeigt eine Explosionsdarstellung von Fig. 7. Die IMS-Sonnenradwelle 20 mit einer Außenverzahnung auf dem generatorseitigen Endumfang wird in dem Getriebegehäuse 22 angeordnet. Das HSS-Stirnrad 23 mit einer Innenverzahnung auf einem radial innenliegenden Umfang wird ebenfalls in dem Getriebegehäuse 22 angeordnet. Dabei werden die Sonnenradwelle 20 und das HSS-Stirnrad 23 so ineinander geschoben, dass die Außenverzahnung der Sonnenradwelle 20 mit der Innenverzahnung des HSS-Stirnrads 23 kämmt. Von der Generatorseite her werden ein rotorseitiges axiales Gleitlager 33, ein Trägerelement 25 mit einem radialen Gleitlager 37, ein generatorseitiges axiales Gleitlager 34 sowie eine axiale Befestigungsscheibe 36 in eine generatorseitige Ausnehmung des HSS-Stirnrads 23 eingeschoben. Zuletzt wird die generatorseitige Ausnehmung des HSS-Stirnrads 23 mit einem Deckel 35 verschlossen.

## Patentansprüche

1. Windkraftgetriebe mit einer schnelllaufenden Stirnradstufe (23, 29), aufweisend ein HSS-Stirnrad (23) mit einer Nabe und einem Zahnkranz und ein damit kämmendes HSS-Ritzel auf einer HSS-Ritzelwelle (29), wobei das HSS-Stirnrad (23) direkt in einem Getriebegehäuse (22) des Windkraftgetriebes gelagert ist und eine Sonnenradwelle (20) einer der schnelllaufenden Stirnradstufe (23, 29) vorgeschalteten Getriebestufe (11, 19, 20) direkt mit dem HSS-Stirnrad (23) gekoppelt (15) ist, wobei
das HSS-Stirnrad (23) zwischen der Nabe und dem Zahnkranz einen außermittigen Steg aufweist und zwischen der Nabe und dem Zahnkranz ein Raum für eine Lageranordnung (24) des HSS-Stirnrades (23) ausgebildet ist, wo die Lageranordnung (24) radial zwischen dem Zahnkranz und der Nabe angeordnet ist, **dadurch gekennzeichnet, dass** die Lageranordnung (24) ein Lager (24) umfasst, das zwischen einem Trägerelement (25), das mit dem Getriebegehäuse (22) verbunden ist, und einem radial weiter außen verlaufenden Innenumfang des HSS-Stirnrads (23) angeordnet ist.

2. Windkraftgetriebe mit einer schnelllaufenden Stirnradstufe (23, 29), aufweisend ein HSS-Stirnrad (23) mit einer Nabe und einem Zahnkranz und ein damit kämmendes HSS-Ritzel auf einer HSS-Ritzelwelle (29), wobei das HSS-Stirnrad (23) direkt in einem Getriebegehäuse (22) des Windkraftgetriebes gelagert ist und eine Sonnenradwelle (20) einer der schnelllaufenden Stirnradstufe (23, 29) vorgeschalteten Getriebestufe (11, 19, 20) direkt mit dem HSS-Stirnrad (23) gekoppelt (15) ist, wobei
das HSS-Stirnrad (23) zwischen der Nabe und dem Zahnkranz einen außermittigen Steg aufweist und zwischen der Nabe und dem Zahnkranz ein Raum für eine Lageranordnung (24) des HSS-Stirnrades (23) ausgebildet ist, wo die Lageranordnung (24) radial zwischen dem Zahnkranz und der Nabe angeordnet ist, **dadurch gekennzeichnet, dass** die Lageranordnung (24) ein Lager (24) umfasst, das als Gleitlager (37) ausgebildet ist, und das zwischen einem Trägerelement (25), das mit dem Getriebegehäuse (22) verbunden ist, und einem radial weiter innen verlaufenden Außenumfang des HSS-Stirnrads (23) angeordnet ist.

3. Windkraftgetriebe nach Anspruch 1 oder 2, wobei die HSS-Ritzelwelle (29) die Ausgangswelle des Windkraftgetriebes bildet.

4. Windkraftgetriebe nach einem der Ansprüche 1 bis 3, wobei das HSS-Stirnrad (23) einseitig gelagert ist.

5. Windkraftgetriebe nach einem der vorhergehenden Ansprüche, wobei das HSS-Stirnrad (23) rotor- oder generatorseitig im Getriebegehäuse (22) gelagert ist.

6. Windkraftgetriebe nach einem der vorhergehenden Ansprüche, wobei das HSS-Stirnrad (23) geschmiedet, aus mehreren Elementen geschweißt oder verschraubt oder mittels eines spanenden Verfahrens aus einem massiven Körper hergestellt ist.

## Claims

1. Wind turbine transmission with a high-speed spur gear stage (23, 29), having an HSS spur gear (23) with a hub and a ring gear and an HSS pinion meshing therewith on an HSS pinion shaft (29), wherein the HSS spur gear (23) is directly mounted in a transmission housing (22) of the wind turbine transmission and a sun gear shaft (20) of a gear stage (11, 19, 20), which is mounted upstream of the high-speed spur gear stage (23, 29), is directly coupled (15) to the HSS spur gear (23), wherein
the HSS spur gear (23) has an eccentric web between the hub and a space is formed between the hub and the ring gear for a bearing arrangement (24) of the HSS spur gear (23), where the bearing arrangement (24) is radially arranged between the ring gear and the hub,
**characterised in that** the bearing arrangement (24) comprises a bearing (24) which is arranged between a carrier element (25), which is connected to the transmission housing (22), and an inner circumference of the HSS spur gear (23) extending radially further outwardly.

2. Wind turbine transmission with a high-speed spur gear stage (23, 29), having an HSS spur gear (23) with a hub and a ring gear and an HSS pinion meshing therewith on an HSS pinion shaft (29), wherein the HSS spur gear (23) is directly mounted in a transmission housing (22) of the wind turbine transmission and a sun gear shaft (20) of a gear stage (11, 19, 20), which is mounted upstream of the high-speed spur gear stage (23, 29), is directly coupled (15) to the HSS spur gear (23), wherein
the HSS spur gear (23) has an eccentric web between the hub and the ring gear and a space is formed between the hub and the ring gear for a bearing arrangement (24) of the HSS spur gear (23), where the bearing arrangement (24) is radially arranged between the ring gear and the hub,
**characterised in that** the bearing arrangement comprises a bearing (24) which is designed as a journal bearing (37), and which is arranged between a carrier element (25), which is connected to the transmission housing (22), and an outer circumference of the HSS spur gear (23) extending radially further inwardly.

3. Wind turbine transmission according to claim 1 or 2, wherein the HSS pinion shaft (29) forms the output shaft of the wind turbine transmission.

4. Wind turbine transmission according to one of claims 1 to 3, wherein the HSS spur gear (23) is mounted on one side.

5. Wind turbine transmission according to one of the preceding claims, wherein the HSS spur gear (23) is mounted in the transmission housing (22) on the rotor side or on the generator side.

6. Wind turbine transmission according to one of the preceding claims, wherein the HSS spur gear (23) is forged, welded or screwed from a plurality of elements or produced from a solid body by means of a cutting method.

## Revendications

1. Transmission d'éolienne, comprenant un étage (23, 29) à roue droite tournant rapidement, comportant une roue (23) droite HSS ayant un moyeu et une couronne dentée et un pignon HSS engrenant sur un arbre (29) de pignon HSS, la roue (23) droite HSS étant montée directement dans un carter (22) de la transmission d'éolienne et un arbre (20) de roue solaire d'un étage (11, 19, 20) de transmission, en amont de l'étage (23, 29) de roue droite tournant rapidement, étant couplé directement à la roue (23) droite HSS, dans laquelle
la roue (23) droite HSS a, entre le moyeu et la couronne dentée, une entretoise excentrée et, entre le moyeu et la couronne dentée, est constitué un espace pour un agencement (24) de palier de la roue (23) droite HSS, où l'agencement (24) de palier est disposé radialement entre la couronne dentée et le moyeu,
**caractérisée en ce que** l'agencement (24) de palier comprend un palier (24), qui est disposé entre un élément (25) de support relié au carter (22) de la transmission et un pourtour intérieur, s'étendant davantage vers l'extérieur radialement, de la roue (23 ) droite HSS.

2. Transmission d'éolienne, comprenant un étage (23, 29) à roue droite tournant rapidement, comportant une roue (23) droite HSS ayant un moyeu et une couronne dentée et un pignon HSS engrenant sur un arbre (29) de pignon HSS, la roue (23) droite HSS étant montée directement dans un carter (22) de la transmission d'éolienne et un arbre (20) de roue solaire d'un étage (11, 19, 20) de transmission, en amont de l'étage (23, 29) de roue droite tournant rapidement, étant couplé directement à la roue (23) droite HSS, dans laquelle
la roue (23) droite HSS a, entre le moyeu et la couronne dentée, une entretoise excentrée et, entre le moyeu et la couronne dentée, est constitué un espace pour un agencement (24) de palier de la roue (23) droite HSS, où l'agencement (24) de palier est disposé radialement entre la couronne dentée et le moyeu,
**caractérisée en ce que** l'agencement (24) de palier comprend un palier (24) constitué en palier (37) lisse et qui est disposé entre un élément (25) de support relié au carter (22) de la transmission et un pourtour extérieur, s'étendant davantage vers l'intérieur radialement, de la roue (23) droite HSS.

3. Transmission d'éolienne suivant la revendication 1 ou 2, dans laquelle l'arbre (29) de pignon HSS forme l'arbre de sortie de la transmission d'éolienne.

4. Transmission d'éolienne suivant l'une des revendications 1 à 3, dans laquelle la roue (23) droite HSS est montée d'un seul côté.

5. Transmission d'éolienne suivant l'une des revendications précédentes, dans laquelle la roue (23) droite HSS est montée du côté de la roue ou du générateur dans le carter (22) de la transmission.

6. Transmission d'éolienne suivant l'une des revendications précédentes, dans laquelle la roue (23) droite HSS est forgée, est soudée ou est vissée en plusieurs éléments ou est fabriquée en une pièce massive au moyen d'un procédé avec enlèvement de copeaux.
